## Europäisches Patentamt
## European Patent Office
## Office européen des brevets

(19)

(11) Numéro de publication: **0 131 565**
**B1**

(12)
# FASCICULE DE BREVET EUROPÉEN

(45) Date de publication du fascicule du brevet:
**21.09.88**

(51) Int. Cl.⁴: **G 10 D 3/16,** G 01 M 5/00

(21) Numéro de dépôt: **83900051.0**

(22) Date de dépôt: **31.12.82**

(86) Numéro de dépôt international:
**PCT/FR 82/00224**

(87) Numéro de publication internationale:
**WO 84/02792 (19.07.84 Gazette 84/17)**

(54) **BAGUETTE D'ARCHET EN RESINE RENFORCEE POUR INSTRUMENTS A CORDES.**

(43) Date de publication de la demande:
**23.01.85 Bulletin 85/4**

(45) Mention de la délivrance du brevet:
**21.09.88 Bulletin 88/38**

(84) Etats contractants désignés:
**AT BE CH DE FR GB LI LU NL SE**

(56) Documents cité:
**WO-A-82/03274**
**DE-B-3 001 521**
**FR-A-2 509 076**
**US-A-2 693 107**
**US-A-3 304 770**
**US-A-3 440 918**
**US-A-4 015 501**

**Mechanical Engennering, vol. 98, no. 3, March 1976 (New York, US), D.W. Haines et al. "Making better musical instruments from graphite composites", pp. 25-27**

(73) Titulaire: **MAIGRET, Jean- Pierre, 20 Villepreux Hameau, F-33160 Saint Aubin de Médoc (FR)**
Titulaire: **CAYUELA, Joseph, 43, Villepreux Village 1, F-33160 Saint Aubin de Médoc (FR)**

(72) Inventeur: **MAIGRET, Jean- Pierre, 20 Villepreux Hameau, F-33160 Saint Aubin de Médoc (FR)**
Inventeur: **CAYUELA, Joseph, 43, Villepreux Village 1, F-33160 Saint Aubin de Médoc (FR)**

(74) Mandataire: **Lepeudry- Gautherat, Thérèse, ARMENGAUD JEUNE CABINET LEPEUDRY 6, rue du Faubourg Saint Honoré, F-75008 Paris (FR)**

## Description

Depuis quelques années, les milieux professionnels de la lutherie s'interrogent sur la rareté, la qualité et les prix des bois entrant dans le constitution des instruments de musique à cordes.

En ce qui concerne les archets nécessitant des bois durs à haute performance mécanique, tel que le PERNAMBOUC, importé du Brésil, les problèmes d'approvisionnement se posent de la même manière. L'accroissement prodigieux, durant ces dernières décades, de la consommation pour le construction et le mobilier nécessitent des abattages s'opérant de plus en plus vers le coeur de la forêt plus chaud et plus humide. Il en résulte des essences d'arbres ayant des structures fibreuses de plus en plus relachées, ce qui confère aux objets des caractéristiques mécaniques amoindries.

Par ailleurs, les exportateurs face à cette situation, conscients des perspectives de pénuries (les cycles de régénération de ces essences d'arbres se comptent en siècles), tendent à hausser leurs pris et instituent des règlementations d'approvisionnement de plus en plus rigides, notamment vis à vis de la liberté du choix des lots.

Cette situation incite donc, pour protéger cette branche artistique, à rechercher des solutions de remplacement satisfaisantes.

Ainsi, les nouveaux matériaux composites à haute performance mécanique (haut module d'élasticité et haute résistance pour une faible densité) tel que les fibres de carbone récemment commercialisées sont les seules à pouvoir apporter une solution comme nous avons pu le vérifier par la réalisation de prototypes suivant le procédé décrit ci-après.

Plus particulièrement, la présente demande concerne une baguette d'archet et son procédé de fabrication tels qu'ils sont revendiqués dans les revendications 1 à 4 ci-jointes.

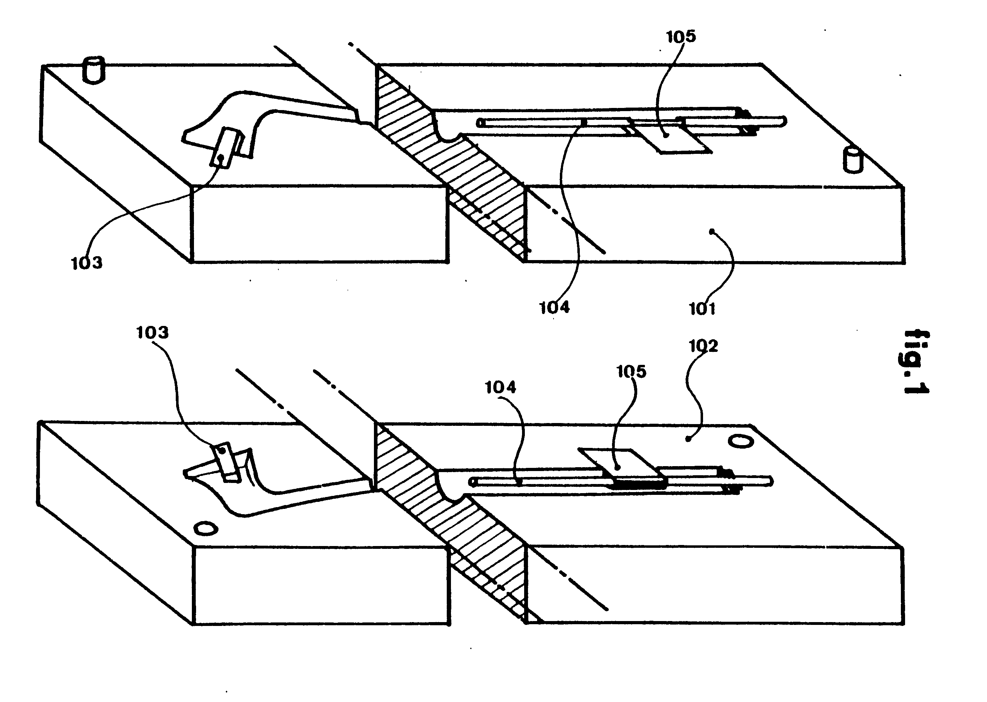

Le procédé, ci-après décrit, relève de la technique du moulage par moule en demi-coquilles symétriques par rapport au plan de symétrie d'une baguette modèle traditionnelle (Fig. 1) et de celle du "drapage" ou de la "stratification" des matériaux filamentaires unidirectionnels enrobés de résine polymérisant à la température ambiante.

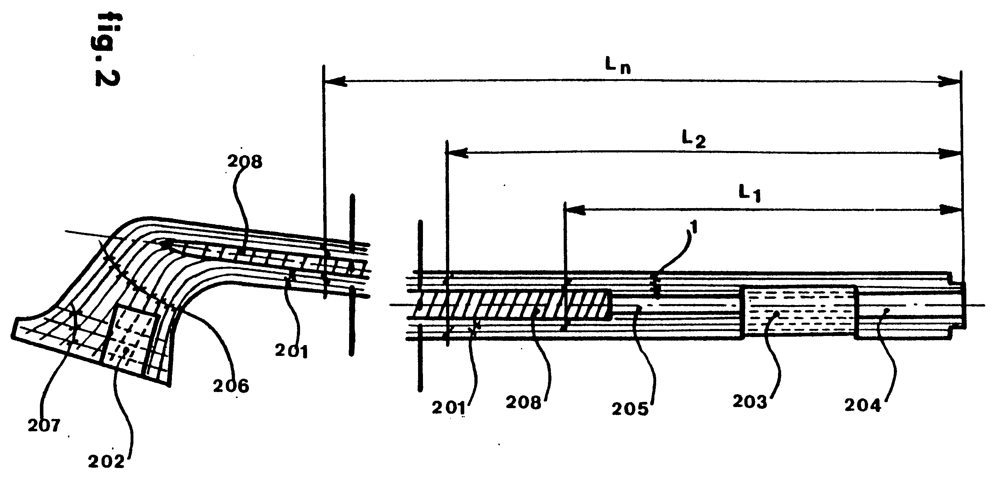

Il consiste, plus précisément (Fig. 2), à disposer longitudinalement des faisceaux (201) de mèches de fibres de carbone, préalablement imprégnés d'une résine pigmentée, dans les deux demi-empreintes des moules.

Ces moules demi-coquilles sont munis de 2 pions de centrage assurant le parfaite position des deux éléments au moment de leur assemblage par collage ou surmoulage. Ils sont de plus munis des "noyaux" assurant la reproduction de tous les évidements fonctionnels de la baguette d'archet conventionnelle (Fig. 1 et 2) à savoir:
- la mortaise de la pointe (202)

- la mortaise (203) pour le logement du système vis-écrou de mise sous tension des crins
- l'alésage (204) pour le passage de la vis du bouton de commande
- la portée avant de cette vis (205)

Ces moules peuvent être soit métalliques avec gravure de l'empreinte ou réalisés beaucoup plus économiquement à l'aide d'un châssis en bois rempli d'une résine silicone qui assurera le surmoulage direct de la baguette modèle.

Le nombre et les différentes longueurs des mèches de carbone constituant les faisceaux (201) dont dépendent en définitive les propriétés mécaniques de la baguette sont définis par le calcul qui tient compte des caractéristiques de la fibre (densité, section, module d'élasticité), de celle dè la résine (densité, module d'élasticité) et de la rigidité que l'on souhaite conférer à la baguette.

L'expression mathématique donnant le nombre N de mèches en fonction de la section D (variable le long de la baguette) est pour une demi-empreinte:
$$N = \frac{\pi}{8} \cdot \frac{E_R - E_B}{E_F - E_R} \cdot \frac{D^2}{S_C}$$
où $E_F$ est le module de la fibre de carbone

$E_R$ celui de la résine

$E_B$ celui du bois que l'on se propose de remplacer

D le diamètre de la baguette en un point considéré de la longueur de cette dernière

$S_C$ la section de la mèche de fibre de carbone

Le système de résine destiné à l'enrobage des fibres de carbone a été choisi en fonction des critères suivants:
- bonne compatibilité avec la fibre de carbone, notamment du point de vue de la mouillabilité
- condition de mise en oeuvre (polymérisation à température ambiante pour éviter les déformations après cuisson)
- bonne résilience (résistance au choc)
- aptitude à la pigmentation

Le système retenu est du type "résine époxyde assouplie" polymérisant à "froid" qui lui confère les propriétés attendues, c'est-à-dire:
- un module d'élasticité de 2000 MPa et
- un allongement à rupture de 8 à 10 %

Une baguette d'archet de violoncelle a été réalisée suivant le présent procédé à titre de démonstration.

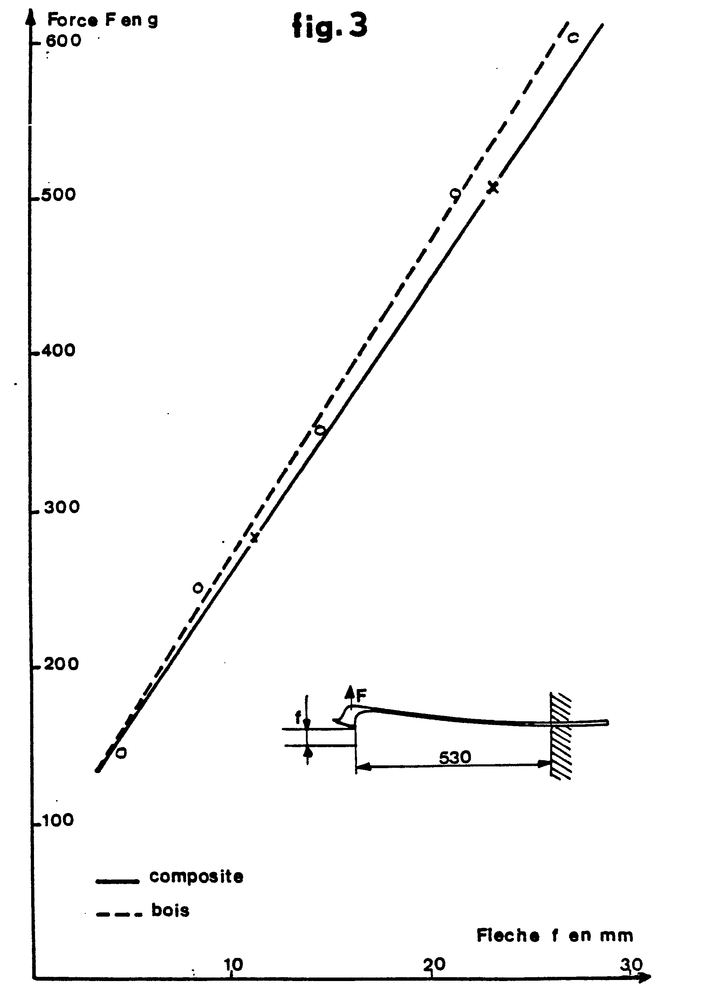

Sa définition a été établie à partir des caractéristiques de poids et d'élasticité d'une baguette traditionnelle en bois de PERNAMBOUC. Le diagramme de la Fig. 3 permet de juger du résultat obtenu.

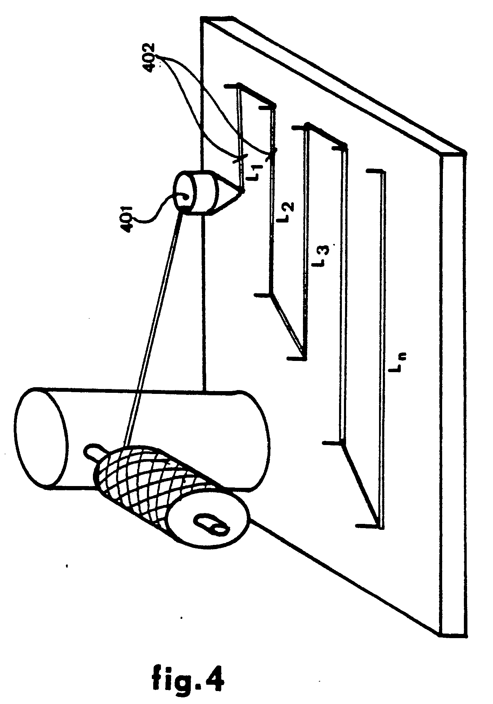

La préparation des faisceaux de mèches s'effectue sur un plan de travail adapté illustré par la Fig. 4. Ce dispositif permet de regrouper les opérations de débit, d'enduction (401) de mèches (402) et de constitution des faisceaux à leur longueur souhaitée.

Après dépôt d'un agent séparateur (démoulage) dans les empreintes des moules, on coule une certaine quantité de la rèsine préalablement mixée et pigmentée de manière à constituer la "peau" externe des pièces.

Le drapage des faisceaux dans les moules s'effectue suivant la configuration schématisée par la Fig. 2 en commençant par le faisceau principal se prolongeant en s'épanouissant dans la pointe (206). Quelques mèches de renfort (207) de la mortaise (202) soit disposées perpendiculairement aux trajectoires du faisceau principal.

Après la dépose des autres faisceaux, on insère et cale dans l'axe des deux demi-éléments un noyau central profilé (208) réalisé dans un matériau de faible densité (balsa ou polystyrène expansé).

Après observation du temps nécessaire à la polymérisation à température ambiante, on procède au démoulage; à la mise à la cote d'épaisseur des deux éléments de la baguette, puis à leur assemblage provisoire par adhésif double face pour permettre les contrôles de masse et de position du centre de gravité.

Bien qu'il n'existe pas encore de spécifications relatives à la position du centre de gravité des baguettes d'archet, il serait possible, à ce stade du procédé, d'effectuer des corrections soit à la pointe par détourage ou lestage, soit par lestage dans le prolongement de la portée avant de la vis du bouton (205).

L'assemblage définitif des deux éléments de la baguette est ensuite assuré par collage sous pression, à température ambiante, à l'aide du même système de résine décrit ci-dessus, ce qui assurera ainsi la parfaite homogénéité mécanique de l'ensemble.

Le correct maintien dans leur position relative des deux éléments pendant le durcissement de la colle est obtenu par leur mise en place dans leurs empreintes respectives et munis de leurs noyaux. Après fermeture du moule, on exerce une pression mécanique de manière à chasser l'excédent de colle.

Les dernières opérations de finition avant le montage classique de l'archet consistent à ébavurer l'excédent de colle, poncer et polir la baguette.

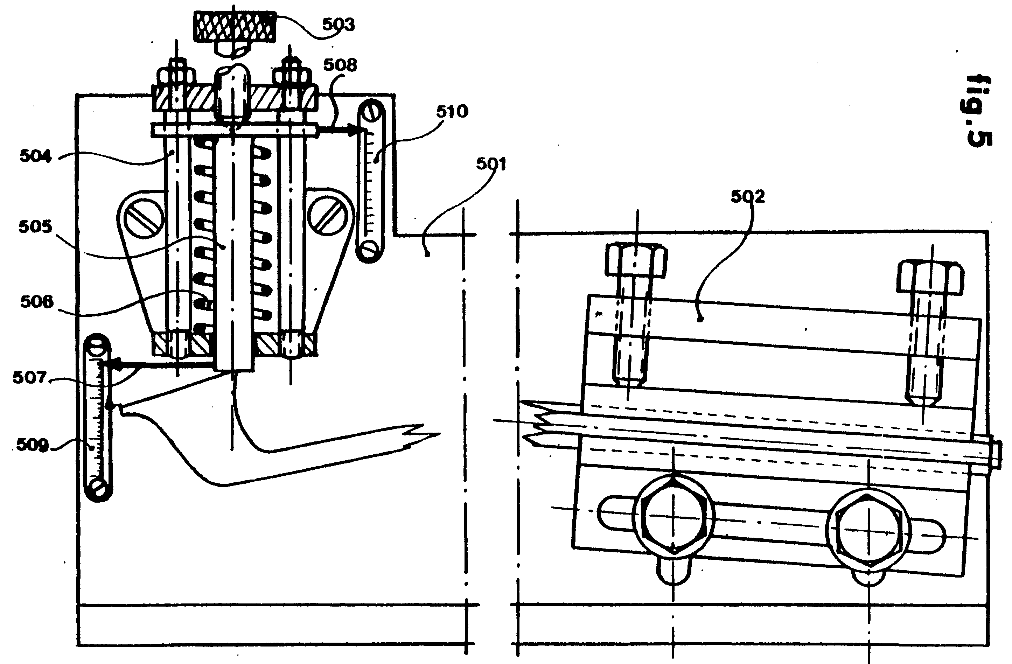

Le contrôle de la caractéristique d'élasticité de la baguette s'effectue par l'essai de flexion du type à une extrémité encastrée (voir le schéma accompagnant la Fig. 3). Cet essai simple peut être aisément réalisé à l'aide de l'appareil dont le principe est illustre par la Fig. 5. Il comprend un bâti (501) supportant un système de serrage (502) de l'extrémité côté hausse de la baguette assurant, ainsi, l'encastrement désiré.

Ce système de serrage est réglable en position dans le plan vertical du bâti et latéral de l'étau (502) pour tenir compte des diverses formes et dimensions suivant les types de baguettes. Au droit de la pointe de l'archet, le bâti supporte le système d'application de l'effort constitué par:
- une vis (503) se vissant dans l'étrier (504) lié au bâti et agissant sur la pièce (505) assure la compression du ressort étalonné (506). La pièce (505) est porteuse de deux indexes (507) et (508) permettant la lecture d'une part, des déplacements de la pointe de l'archet sur la réglette graduée (509) fixée au bâti et, d'autre part des efforts appliqués lus sur la réglette (510).

Les avantages découlant de l'emloi du présent procédé de réalisation de baguettes d'archets en matériau composite, par rapport à l'état actuel de la technique, sont nombreux. En effet, en plus du fait qu'il constitue un palliatif satisfaisant aux carences éventulles des matériaux naturels, ce procédé entraîne les aventages suivants:
- une mise en oeuvre simple, industrielle, ne nécessitant que peu de façonnage à l'outil, comparativement à celle des baguettes traditionnelles en bois exigant une habileté manuelle exceptionnelle ou même vis-à-vis d'autres procédés Brevet d'invention FR-A-1 515 007 "Perfectionnements aux arches des instruments de musique" par enroulement circonférentiel de fibres nécessitant alors des machines spéciales à bobiner.
- ajustage précis et continu des propriétés mécaniques de rigidité et de la masse de la baguette permettant ainsi une optimisation rapide de la définition d'un archet en fonction des désidératas personnels de l'artiste
- respect de la forme générale actuelle propre à chaque type d'instrument, cette forme résultant d'une longue évolution à travers plusieurs siècles
- une plus grande résistance mécanique globale pour une masse équivalente aux archets traditionnels, grâce à la disposition longitudinale des faisceaux fibreux parallèlement à la fibre neutre de la baguette, comparativement à d'autres dispositions, ou, dans le cas des baguettes en bois dont la texture est correctement orientée, mais aléatoirement interrompue par l'outil de coupe
- cet aspect est encore plus intéressant dans la zone critique de la pointe où, grâce à la prolongation (206) des trajectoires des mèches du faisceau principal du fût de la baguette et à leur répartition dans toute l'étendue de la pointe, on obtient ici une solidité nettement supérieure aux baguettes de bois
- une meilleure stabilité dans le temps au vieillissement et aux variations de température et d'hygrométrie de l'atmosphère ambiante. Le carbone ne vieillit pas et son coefficient de dilatation thermique est pratiquement négligeable
- le procédé par moulage des baguettes d'archets assure, par ailleurs, l'interchangeabilité avec les accessoires rapportés (hausse et boutons) qui seraient fabriqués suivant un procédé de moulage. Actuellement, l'interchangeabilité de ces accessoires est rendu impossible par la confection artisanale
- enfin, le choix de la disposition longitudinale des faisceaux de fibres assure, dans une certaine mesure, un aspect esthétique rappelant celui du veinage du bois, puisque l'orientation de la texture de ce dernier coïncide avec celle des fibres de mèches de carbone du présent procédé

## Revendications

1. Baguette d'archet comprenant un corps allongé s'étendant selon un axe longitudinal et prolongé par une pointe, ledit corps présentant une structure composite comprenant une résine renforcée par une pluralité de fibres (201) de différentes longueurs noyées dans la résine et s'étendant selon l'axe longitudinal du corps, ladite structure composite étant disposée à la périphérie du corps de façon à menager un espace central, caractérisée en ce que:
- les fibres sont regroupées en une pluralité de mèches (206) dont le nombre N, pour une moitié de baguette et en un point donné le long de l'axe longitudinal, est défini par l'expression mathématique suivante:

$$N = \frac{\pi}{8} \cdot \frac{E_B - E_R}{E_F - E_R} \cdot \frac{D^2}{S_C}$$

D: diamètre souhaité de la baguette en ce point

$E_B$: module d'élasticité souhaité de la baguette en ce point

$E_F$: module d'élasticité de la fibre

$E_R$: module d'élasticité de la résine

$S_C$: section de la mèche de fibre
- au moins une partie des mèches (206) se prolonge jusque dans ladite pointe et s'y étende de façon épanouie;
- un évidement (202) destiné à loger un dispositif de fixation de crins est ménagé dans ladite pointe et des mèches s'étendent transversalement au droit dudit évidement;
- un noyau d'allègement (208) en un matériau à faible densité remplit ledit espace central du corps; et
- l'extrémité de la baguette opposée à ladite pointe, qui présente des évidements (203, 204) destinés à loger un dispositif vis-écrou de mise en tension des crins dont une portée (205) pour ladite vis, comporte une cavité de lestage située dans le prolongement de ladite portée.

2. Procédé de fabrication d'une baguette d'archet selon la revendication 1, caractérisé en ce qu'il comprend les étapes suivantes:
- constituer des mèches (206) de fibres à l'aide d'un dispositif agencé pour produire des mèches de différentes longueurs, et imprégner ces mèches d'une résine;
- couler de la résine dans deux demi-coquilles allongées (101, 102) et destinées au moulage de deux demi-baguettes;
- déposer dans les demi-coquilles en les drapant, des mèches longitudinales, épanouir dans la pointe de la baguette d'archet les mèches qui s'y prolongent, et déposer des meches transversales dans la pointe ;
- déposer dans les demi-coquilles (101, 102) des noyaux (103 à 105) pour réaliser des évidements destinés à loger des dispositifs de fixation et de mise en tension des crins, ainsi qu'une moitié d'un noyau central d'allègement;
- assurer la polymérisation de la résine;
- surfacer et ébavurer les deux demi-baguettes obtenues;
- assembler provisoirement les deux demi-baguettes en vue d'effectuer des réglages de masse et de centre de gravité de la baguette d'archet par détourage ou lestage de ladite pointe ou par lestage de ladite cavite de lestage; et
- assembler définitivement les deux demi-baguettes par collage sous pression au moyen de ladite résine.

3. Procédé selon la revendication 2, dans lequel ladite résine est du type polymérisant à froid.

4. Procédé selon la revendication 2 ou la revendication 3, dans lequel, après avoir surfacé et ébavuré la baguette d'archet, on contrôle son degré d'élasticité en:
- encastrant la baguette par son extrémité opposée à ladite pointe dans un étau (502) monté sur un bâti (501) de façon réglable en position verticalement et latéralement;
- appliquant un effort sur ladite pointe au moyen d'un système monté sur le bâti (501) et comprenant une pièce (505) montée mobile dans ledit système pour pousser la pointe de la baguette, ladite pièce comportant deux index (507, 508) permettant de lire d'une part la valeur du déplacement de la pointe et d'autre part la valeur de l'effort appliqué sur celle-ci, ledit système comprenant en outre des moyens pour déplacer ladite pièce (505) vers la pointe de la baguette.

## Patentansprüche

1. Bogen für Streichinstrumente, mit einem Körper, der sich entlang einer Längsachse erstreckt und durch eine Spitze verlängert ist, wobei der Körper aus einer Verbundstruktur besteht, die ein Harz enthält, das durch eine Vielzahl von Fasern (201) mit unterschiedlicher Länge verstärkt ist, die in das Harz eingelassen sind und sich entlang der Längsachse des Körpers erstrecken und wobei die Verbundstruktur an der Peripherie des Körpers mit einer zentralen Aussparung angeordnet ist, dadurch gekennzeichnet, daß:
- die Fasern in einer Vielzahl von Strängen (206) angeordnet sind, deren Anzahl N für eine Hälfte des Bogens und in einem Punkt entlang der Längsachse durch folgenden mathematischen Ausdruck definiert ist:

$$n = \frac{\pi}{8} \cdot \frac{E_B - E_R}{E_F - E_R} \cdot \frac{D^2}{S_C}$$

D gewünschter Durchmesser des Bogens in diesem Punkt

$E_B$ gewünschter Elastizitätsmodul des Bogens in diesem Punkt

$E_F$ Elastizitätsmodul der Fasern

$E_R$ Elastizitätsmodul des Harzes

$S_C$ Querschnitt des Faserstanges.
- sich wenigstens ein Teil der Stränge (206) bis in die Spitze erstreckt und diese unter Erweiterung ausfüllt;

- eine Aussparung (202), die zur Lagerung einer Anordnung zur Befestigung des Bezugs (Haare) bestimmt ist, in der Spitze vorgesehen ist, wobei sich Stränge quer zur besagten Aussparung erstrecken;

- ein Entlastungskern (208) aus einem Material mit geringerer Dichte die zentrale Aussparung im Körper füllt; und daß

- das der Spitze des Bogens gegenüberliegende Ende mit Aussparungen (203, 204) versehen ist, die zur Lagerung einer Schraub-Mutter-Befestigung zur Spannung des Bezugs (Haare) bestimmt sind, deren Bereich (205) für die Schraube eine Ballastkammer umfaßt, die in der Verlängerung des Bereiches angeordnet ist.

2. Herstellungsverfahren für einen Bogen nach Anspruch 1, gekennzeichnet durch folgende Verfahrensschritte:

- Herstellen von Strängen (206) aus Fasern mit Hilfe einer Vorrichtung zur Herstellung von Strängen verschiedener Längen und Imprägnierung dieser Stränge mit einem Harz;

- Einführen des Harzes in zwei Halbschalen (101, 102), die zur Formung von zwei Halbbogen bestimmt sind;

- Einlegen der Längsstränge in die Halbschalen und deren Überzug, Aufweiten der sich in die Spitze des Bogens verlängernden Stränge und Einlegen von Quersträngen in die Spitze;

- Einlegen von Kernen (103 und 105) in die Halbschalen (101, 102), um die Aussparungen zu bilden, die zur Aufnahme von Vorrichtungen zur Befestigung und Spannung des Bezugs (Haare) bestimmt sind, sowie eine Hälfte für einen zentralen Entlastungskern;

- Gewährleisten der Polymerisation des Harzes;

- Bearbeitung der Oberfläche und Entgraten der beiden erhaltenen Halbbögen;

- Provisorisches Zusammensetzen der beiden Halbbogen und Kontrolle der Einstellung der Masse und des Schwerpunktes des Bogens mittels Gewichtsreduzierung oder Ballastzuführung an der Spitze oder durch Ballastzuführung in die Ballastkammer; und

- endgültiger Zusammenbau der beiden Halbbogen durch Zusammenpressung mit einem Harz.

3. Herstellungsverfahren nach Anspruch 2, dadurch gekennzeichnet, daß das Harz ein bei Kälte polymerisierender Typ ist.

4. Herstellungsverfahren nach Anspruch 2 oder 3, dadurch gekennzeichnet, daß nach der Bearbeitung der Oberfläche und Entgratung des Bogens der Elastizitätsgrad überprüft wird, wobei:

- der Bogen an seinem der Spitze gegenüberliegenden Ende in einen Schraubstock (502) eingespannt wird, der auf einem Rahmen (501) senkrecht und seitwärts verstellbar angeordnet ist;

- eine Kraft auf die Spitze mittels einer Vorrichtung ausgeübt wird, die auf dem Rahmen (501) angeordnet ist und ein Teil (505) enthält, das beweglich in dieser Vorrichtung angeordnet ist, um die Spitze des Bogens zu versetzen, wobei das Teil zwei Zeiger (507, 508) trägt, die einerseits ein Ablesen des Wertes der Versetzung (Durchbiegung) der Spitze und andererseits den Wert der aufgewendeten Kraft gestattet, wobei die Vorrichtung weiterhin Mittel zur Verstellung des Teiles (505) gegenüber der Spitze des Bogens enthält.

**Claims**

1. Bow stick comprising an elongate body extending along a longitudinal axis and with a tip at one end, said body having a composite structure comprising a resin reinforced by a plurality of fibres (201) of different lengths, embedded in the resin and extending along the longitudinal axis of the body, said composite structure being provided at the periphery of the body so as to form a central space, characterised in that the fibres are grouped in a plurality of strands (206) whose number N, for a half stick, at a given point along the longitudinal axis, is defined by the following mathematical expression,

$$N = \frac{\pi}{8} \cdot \frac{E_B - E_R}{E_F - E_R} \cdot \frac{D^2}{S_C}$$

D: desired diameter of the stick at this point
$E_B$: desired modulus of elasticity of the stick at this point
$E_F$: modulus of elasticity of the fibre
$E_R$: modulus of elasticity of the resin
$S_C$: cross-section of fibre strand;

at least some of the strands (206) extend into said tip wherein they splay out;

a slot (202) for accommodating a device for anchoring hairs is provided in said tip, wherein the strands extend transversely at right angles to said slot;

an insert (208) of low-density material to lighten the stick fills said central space of the body; and

the end of the stick opposite to said tip, and having recesses (203, 204) for housing a thumbscrew for tightening the hairs, one of which comprises a bearing (205) for the said screw, has a weighting cavity in the extension of said bearing.

2. Method of manufacture of a bow stick in accordance with claim 1, characterised by forming strands (206) of fibres with the aid of an apparatus designed to produce strands of different lenths, and impregnating these strands with a resin;

introducing some of the resin into two extended half-moulds (101, 102) for casting two half sticks;

disposing longitudinal strands in the half-moulds, arranging them evenly, splaying out, in the tip of the bow stick, the strands that reach the tip, and disposing transverse strands in the tip;

disposing cores (103 to 105) in the half-moulds (101, 102) for forming recesses for housing, anchoring and tensioning devices for the hairs, and half of a weight-reducing central core;

ensuring the polymerisation of the resin; smoothing and polishing the two half sticks obtained;

temporarily assembling the two half sticks so as to adjust the mass and centre of gravity of the bow stick by lightening or weighting said tip or by weighting said weighting cavity; and

permanently assembling the two half sticks, through adhesion, under pressure, by means of said resin.

3. Process in accordance with claim 2, in which said resin comprises a cold curing type.

4. Process in accordance with claim 2 or claim 3, in which, after having smoothed and polished the bow ostick, the degree of elasticity is checked by:

clamping the stick by the end opposite to said tip in a vice (502) mounted on a stand (501) so as to be vertically and horizontally adjustable; and

applying a force to said tip by means of a system mounted on the stand (501) and comprising an adjustable device (505) for exerting pressure on the tip of the stick, said device incorporating two pointers (507, 508) enabling, on the one hand, the amount of movement of the tip, and on the other the force applied to it to be read, said system further comprising means for adjusting the said device (505) towards the tip of the stick.

# fig.1

**fig. 2**

# fig. 3

Force F en g

600

500

400

300

200

100

composite

--- bois

Fleche f en mm

10    20    30

F

f

530

fig.4

fig.5